# EUROPEAN PATENT SPECIFICATION

(11) **EP 2 893 805 B1**
(45) Date of publication and mention of the grant of the patent: **10.10.2018**
(21) Application number: 14003856.3
(22) Date of filing: 14.11.2014
(51) Int. Cl.: A01K 97/02, A01K 91/06

(54) **A fish-bait discharger**
Fischköderspender
Déchargeur d'amorce pour la pêche

(30) Priority: 20.12.2013 GB 201322700
(43) Date of publication of application: 15.07.2015
(73) Proprietor: Fox International Group Limited, Warley Brentwood CM14 5EG (GB)
(72) Inventor: Collins, Mark John, Epping, Essex CM16 4FF (GB)
(74) Representative: Crouch, David John

(56) References cited:
- WO-A1-2013/153367
- GB-A- 2 019 181
- GB-A- 2 304 514
- GB-A- 2 432 768
- JP-A- 2001 204 333
- JP-U- S61 197 877

## Description

The present invention relates to a fish-bait discharger comprising an elongate streamlined hollow container which has a nose portion, is globular at its forward end, and tapers towards its tail portion, the container having a first part and a second part, the first and second parts both extending from the nose portion to the tail portion and the said second part being provided with a hinge at its rear end, by which it is pivotably attached to the said first part of the container so as to be pivotable between an open position, in which the container can be filled with or emptied of bait, and a closed position, in which bait is retained within the container, the nose portion being provided with an impact sensitive release mechanism by which the said second part is released from its closed position to enable it to adopt its open position upon impact of the discharger with the surface of water which is to be baited.

JP S61 197877 U discloses a bait discharger having a two-part container in which the division between the two parts is generally transverse.

A discharger having the construction set out in the opening paragraph of the present specification is described for example in WO 2009/098507 A1, or WO 2013/153367 A1.

A disadvantage of such a construction is that the container thereof comprises two substantially equal halves. As a result, filling of this discharger before it is launched is difficult. One way it can be filled is to fill one of the halves and create a mound of the bait to be received by the other half when the discharger is closed. This results in either the container being partly empty or excess bait being squeezed out between the halves as they are closed up against one another, as a result of which further cleaning is needed. Alternatively, both halves could be filled, but this is a cumbersome procedure.

The present invention seeks to provide a discharger which is less subject to such a problem.

Accordingly, the present invention is directed to a fish-bait discharger having a construction set out in the opening paragraph of the present specification, in which the said first part of the container is a main part thereof, and the said second part of the container is a lid thereof, and in that the angle through which the said main part extends around an imaginary central axis of the discharger, at least at forward positions along that axis rearwardly of the release mechanism, exceeds 1.1π radians, according to independent claim 1.

This provides the advantage that the main part can act as a scoop so that in one motion the container can be filled by a scooping action to fill that main part with fish-bait, whereupon the lid can be shut and the discharger is ready for launch.

An even greater advantage can be achieved in this way if the said angle is substantially equal to 1.5π radians.

A stronger hinge can be provided if the said angle reduces at positions along the axis at or approaching the tail portion of the container, to substantially n radians.

Nonetheless, it is possible for the said angle to exceed 1.5n radians at the nose end of the container and to be less than n radians at the tail portion of the container.

A smooth transition in this regard, progressing in a rearward direction along the axis of the discharger is obtained if there is an exponential decrease in the said angle.

The said main part may be a longitudinal part which extends from the nose portion to the tail portion.

The said lid may be a longitudinal part which extends from the nose portion to the tail portion.

Such a lid may provide the advantage that it, as well as the main part, acts as a clear visual marker for the location of the discharger when it is floating in the water subsequent to its being used to discharge bait into the water. If the discharger should become detached from the line, it is then easier to find once it has been blown to one side of the lake or whatever is constituted by the water being fished.

The lid may be sprung loaded at the hinge towards its open position.

The release mechanism may comprise a plunger, or a member pivoted about a transverse axis, depressed inwardly relative to the container upon impact with water.

The plunger or other member of the release mechanism may be spring-loaded so that the action of the surface of the water upon impact urges the plunger or other member against the force of the spring.

The tail end of the discharger may be provided with flight fins. The fins may be provided by a part made separately from the container and attached thereto, or they may be made integrally with the container.

At least one air pocket may be provided in the said tail end. This adds to the buoyancy of the discharger so that it floats, or so that it floats better.

The hinge may be located forwardly of the fins.

A membrane or wall may extend across the interior of the container at the nose end thereof to isolate the release mechanism from the bait receiving interior of the container.

This reduces the likelihood of the release mechanism being fouled by bait.

An example of a fish-bait discharger made in accordance with the present invention will now be described in greater detail with reference to the accompanying drawings, in which:
- Figure 1: shows a perspective view of a fish-bait discharger, embodying the present invention, from one side and from a front end thereof having a lid in its open position;
- Figure 2: shows an exploded perspective view of the discharger shown in Figure 1, along with a block representing fish-bait when it is contained within the discharger;
- Figure 3: shows a view of the discharger shown in Figure 1, from the other side thereof and with its lid in a closed position;
- Figure 4: shows a front end view of the discharger as shown in Figure 3; and
- Figure 5: shows an axial sectional view of the discharger as shown in Figure 3.

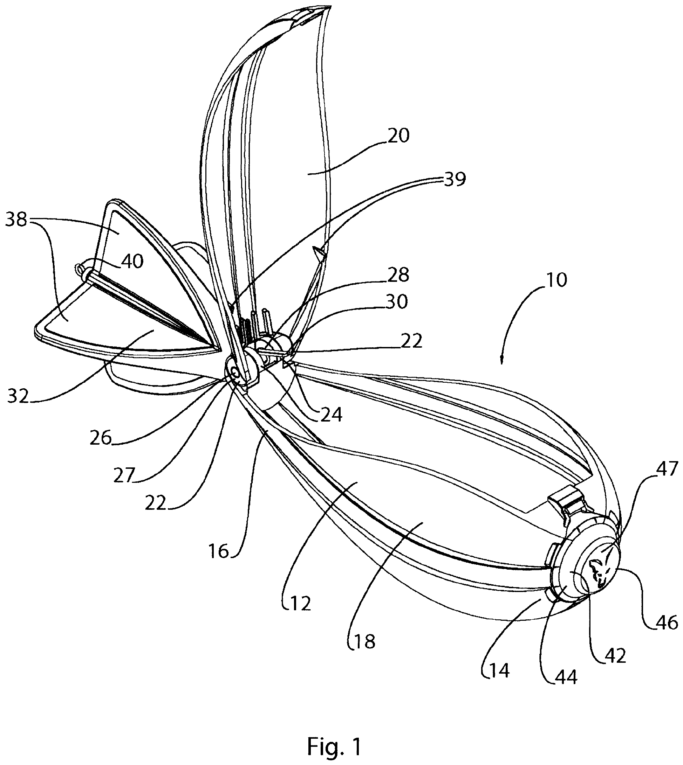

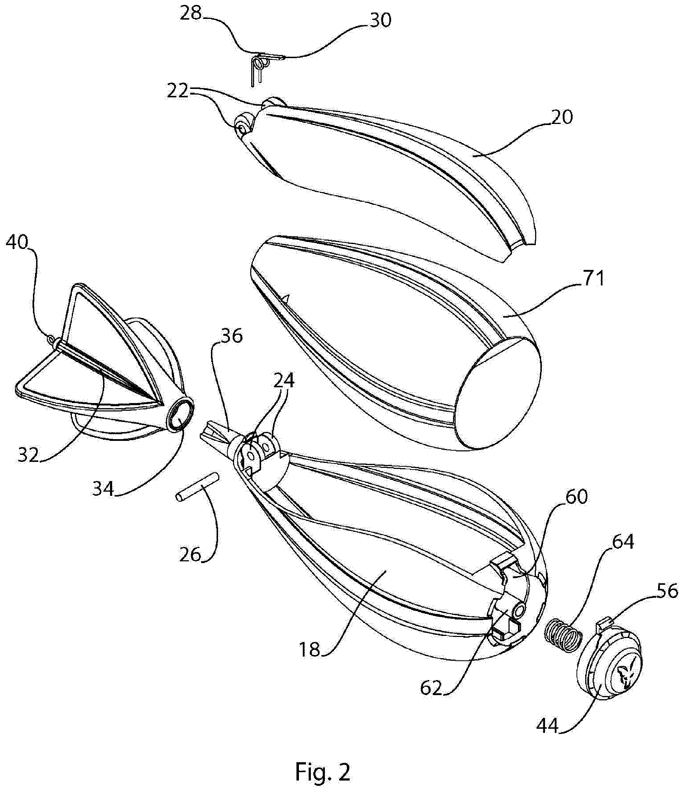

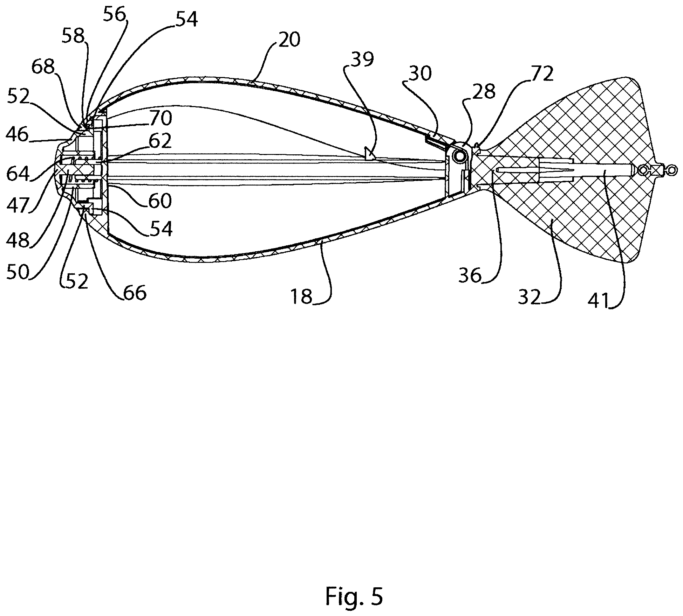

As shown in Figures 1 to 5, a fish-bait discharger 10 comprises an elongate streamlined hollow fish-bait container 12. The latter has a rounded nose portion 14 and tapers towards its rear tail portion 16. The general shape of the container is generally globular at its forward end and tapers towards its rear end. This provides advantageous aerodynamic properties for the discharger 10, and improves the ease with which it can be cast. The container comprises an elongate main part 18 which extends from the nose portion 14 to the tail portion 16 of the container, and an elongate lid 20 which also extends from the nose portion 14 to the tail portion 16.

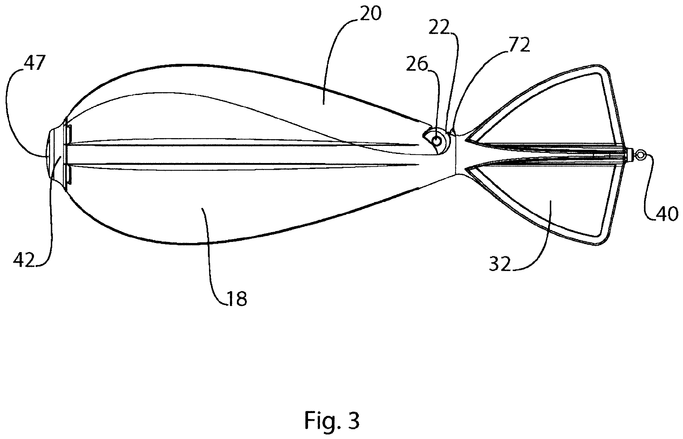

The rear end of the lid 20 is provided with two trunnions 22 between which are sandwiched trunnions 24 at the tail end of the main part 18. A pivot pin 26 extends laterally of the container through respective central holes in the trunnions 22 and 24 to create a hinge 27 for the lid whereby it can pivot about that hinge 27 between an open position as shown in Figure 1 to a closed position as shown for example in Figure 3. A torsion spring 28 with an arm 30 is provided to spring-load the lid 20 towards its open position. A separate tail part 32 is provided with an axially extending recess 34 which receives an axially extending rearwardly projecting spigot 36 at the tail end of the main part 18 of the container .12. This secures the tail end 32 to the container 12 of the discharger 10. The tail end part 32 comprises four flight fins 38 equally-angularly spaced about a longitudinal central axis of the discharger 10. The hinge 27 is therefore located forwardly of the fins 38. A swivel 40 is provided at the rear end of the tail end 32 to enable the discharger to be attached to a casting line. The tail-end part is formed with an air-filled hollow axially extending portion 41.

The lid is provided with location pips 39 on its periphery which engage with corresponding portions of the periphery of the main part 18 when the lid 20 is closed to reduce the likelihood of the lid 20 being sheared out of alignment with the main part 18.

The nose portion 14 of the container 12 is provided with an impact sensitive release mechanism 42. The latter comprises a plunger 44 which has a rounded disc-shaped portion 46 which around its periphery continues the streamlined rounded shape of the container 12 at its nose portion 14, but which has a forwardly protruding central circular portion 47. The release mechanism 42 further comprises a central axially extending spigot 48 integral with the disc-shaped portion 46, a cylindrical portion 50 surrounding but spaced from the spigot 48 and also integral with the disc-shaped portion 46, leg portions 52 extending rearwardly from the rim of the disc-shaped portion 46, and annular flange portions 54 extending outwardly respectively from those ends of the leg portions 52 which are further from the disc-shaped portion 46. The flange portion 54 which is closest to the lid 20 is provided with a snap-action lip 56 provided with an outwardly facing inclined surface 58.

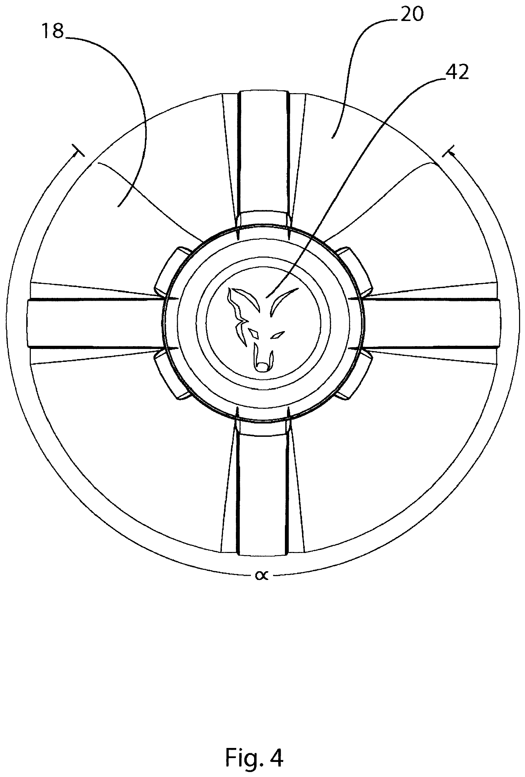

If the angle α is defined as the angle by which the main part 18 of the container 12 surrounds the central longitudinal axis of the discharger 10, at a given position along that axis, Figure 4 shows the angle α at the position therealong at which the container 12 has its greatest diameter. It can be seen that the angle α varies as a function of position along that axis of the discharger 10. At the nose of the container 12, adjacent to the plunger 44, it is at its greatest, being about 1.6n radians. From there, at successively more rearward locations along the axis, it decreases to about 1.47π radians at the position therealong at which the diameter of the container 12 has its greatest value, and decreasing exponentially from there to the tail portion at which α is about π radians or slightly less.

A transverse membrane or wall 60 extends across the container 12 at the nose end 14 thereof to form a seal between the bait receiving interior of the container 12 and the release mechanism 42 to isolate the former from the latter. A cylindrical portion 62 integral with the wall 60 extends centrally and forwardly thereof and receives and acts as a guide for the spigot 48 of the plunger 42. A helical spring 64 extends between the wall 60 and the plunger 42 between the cylindrical portions 62 and 50, to urge the plunger in an outward direction. Shoulder portions 66 of the main part 18 of the container 12 engage the flange portions 54 to hold the plunger 42 against the action of a spring 64.

The curved edges around the outside of the lid 20 correspond to the curved edges of the main part 18, to form a good closure therewith, so that together, with the lid 20 in its closed position, these parts define a streamlined shape of the container 12, the outside of which is generated by rotation of an axially extending line on its surface about its longitudinal axis.

The nose end of the lid 20 is provided with an inwardly directed lip portion 68 having an inwardly directed inclined surface 70.

The rear end of the main body 18 is provided with a buffer 72 to limit the extent to which the lid 20 can swing away from the main body 18 and thereby reduce the likelihood of damage thereto.

When in use with the lid 20 in the open position as shown in Figure 1, the tail end of the main part 18 of the container 12 is grasped by the user, and the main part 18 of the container is used as a scoop to scoop up fish-bait from a pot of such bait (not shown). With a full scoop 71, some of the bait will project above the main part 18 of the container 12 so that when the lid 20 is brought down upon the main part 18 of the container 12 to close the latter against the action of the spring 28, excess bait is squeezed out between the main part 18 and the lid 20 as the nose end of the lid 20 approaches the release mechanism 42, with a minimal amount being trapped between the main part 18 of the container and the lid 20 because of the relatively thin walls of these two parts.

With continued closure of the lid 20, the incline 70 of the latching portion 68 rides up the incline 58 of the snap action lip 56 as the latter along with the whole of the plunger 42 is urged inwardly by such closing action against the helical spring 64. As the tip of the latching portion 68 passes over the tip of the lip 56, the plunger 42 snaps upwardly by the action of the spring 64 to trap the latching portion 68 underneath the lip portion 56, and so retain the lid 20 against being opened by the spring 28. The latching portion 68 and portions of the main part 18 at opposite ends of the incline 58 constitute a keying which also reduces the likelihood of the lid 20 being sheared out of alignment with the main part 18. For launch, a casting line end is tied to the swivel 40, the casting line being secured to a fishing rod which is used to cast the discharger 10 into the region of water which is to be baited.

Whilst the discharger is in free flight, the combination of its fins 38 and the streamlined shape of the container 12 causes it to fly through the air nose first. With the trajectory of its flight ending at the surface of the water to be baited, the plunger 42 strikes the surface of the water first, and this sudden increase in the resistance to motion of the plunger 42 causes it to be depressed into the discharger 10 against the action of the helical spring 64. This happens earlier by virtue of the protruding portion 47 than when it would happen if the portion 47 did not protrude. As it does so, the end edge of the lip 56 passes beyond the end edge of the latching portion 68 so that the lid 20 is released by the release mechanism 42. As a result, the arm 30 of the spring 28 urges the lid 20 to pivot about its pivot 26 into the open position it has as shown in Figure 1, but in this case with the main part 18 of the container 12 underneath the water so that the bait that had been contained within the container 12 is discharged into the water.

The interior of the release mechanism 42 is substantially totally enclosed, reducing the likelihood of it being fouled and made inoperative by extraneous bait or dirt.

The ratio of the size of the main part 18 to that of the lid 20 in the illustrated construction is substantially 70:30, but other relative sizes are possible.

Numerous variations to the construction of the illustrated discharger 10 may occur to the reader without taking the resulting construction outside the scope of the present invention. For example, the hinge of the lid 20 may be moved forwardly relative to the position it has as shown in Figure 1, with portions of the main part 18 of the container 12 completely surrounding the longitudinal axis of the discharger 10 at positions rearwardly of the resulting hinge position.

Instead of a pivot pin 26, the lid 20 may be made integrally with the main part 18, but with a thinned portion of plastics material linking the two parts together, which thinned portion is sufficiently flexible to act as a pivot or "living hinge".

Instead of the plunger 44, a pivoted triggering member could be provided, using a torsion spring or an elastic member to bias such a pivoted member in the forward direction.

The pips 39 could be provided on the main part 18, to engage the lid 20 when the latter is closed, instead of on the lid 20.

Drainage holes may be provided in the main body 18 of the discharger to facilitate discharge of the bait therefrom and/or the escape of water thereform.

The discharger 10 floats on its side, but other potential orientations are possible with suitable modifications, for example with its fins up and nose down, or flat with its lid down and submerged.

## Claims

1. A fish-bait discharger (10) comprising an elongate streamlined hollow container (12) which has a nose portion (14), is globular at its forward end, and tapers towards its tail portion (16), the container (12) having a first part (18) and a second part (20), the first and second parts (18 and 20) both extending from the nose portion (14) to the tail portion (16) and the said second part (20) being provided with a hinge (27) at its rear end, by which it is pivotably attached to the said first part (18) of the container (12) so as to be pivotable between an open position, in which the container (12) can be filled with or emptied of bait, and a closed position, in which bait is retained within the container (12), the nose portion (14) being provided with an impact sensitive release mechanism (42) by which the said second part (20) is released from its closed position to enable it to adopt its open position upon impact of the discharger (10) with the surface of water which is to be baited, **characterised in that** the said first part (18) of the container (12) is a main part thereof, and the said second part (20) of the container (12) is a lid (20) thereof, and **in that** the angle (α) through which the said main part (18) extends around an imaginary central axis of the discharger (10), at least at forward positions along that axis rearwardly of the release mechanism (42), exceeds 1.1π radians.

2. A fish-bait discharger (10) according to claim 1, **characterised in that** the said angle (α) reduces at positions along the axis at or approaching the tail portion (16) of the container (12), to substantially π radians.

3. A fish-bait discharger (10) according to claim 1, **characterised in that** the said angle (α) exceeds 1.5π radians at the nose end (14) of the container (12) and is less than π radians at the tail portion (16) of the container (12).

4. A fish-bait discharger (10) according to claim 3, **characterised in that** progressing in a rearward direction along the axis of the discharger (10), there is an exponential decrease in the said angle (α).

5. A fish-bait discharger (10) according to any preceding claim, **characterised in that** the said main part (18) is a longitudinal part which extends from the nose portion (14) to the tail portion (16).

6. A fish-bait discharger (10) according to any preceding claim, **characterised in that** the said lid (20) is a longitudinal part which extends from the nose portion (14) to the tail portion (16).

7. A fish-bait discharger (10) according to any preceding claim, **characterised in that** the lid (20) is sprung loaded at the hinge (27) towards its open position.

8. A fish-bait discharger (10) according to any preceding claim, **characterised in that** the release mechanism (42) comprises a plunger (44), or a member pivoted about a transverse axis, depressed inwardly relative to the container (12) upon impact with water.

9. A fish-bait discharger (10) according to claim 8, **characterised in that** the plunger (44) or other member of the release mechanism (42) is spring-loaded so that the action of the surface of the water upon impact urges the plunger (44) or other member against the force of the spring (64).

10. A fish-bait discharger (10) according to any preceding claim, **characterised in that** the tail end (16) of the discharger (10) is provided with flight fins (38).

11. A fish-bait discharger (10) according to any preceding claim, **characterised in that** at least one air pocket (41) is provided in the said tail end (16).

12. A fish-bait discharger (10) according to any preceding claim, **characterised in that** the tail end of the discharger (10) is provided with flight fins (38), wherein the hinge (27) is located forwardly of the fins (38).

13. A fish-bait discharger (10) according to any preceding claim, **characterised in that** a membrane or wall (60) extends across the interior of the container (12) at the nose end (14) thereof to isolate the release mechanism (42) from a bait receiving interior of the container (12).

## Patentansprüche

1. Fischköder-Dispenser (10), umfassend einen länglichen, stromlinienförmigen Hohlbehälter (12), der einen Vorderabschnitt (14) aufweist, an seinem vorderen Ende kugelförmig ist und sich zu seinem Hinterabschnitt (16) hin verjüngt, wobei der Behälter (12) ein erstes Teil (18) und ein zweites Teil (20) aufweist, sowohl das erste als auch das zweite Teil (18 und 20) sich vom Vorderabschnitt (14) zum Hinterabschnitt (16) erstrecken und das zweite Teil (20) an seinem hinteren Ende mit einem Scharniergelenk (27) versehen ist, durch das es an dem ersten Teil (18) des Behälters (12) schwenkbar befestigt ist, so dass es schwenkbar ist zwischen einer geöffneten Stellung, in der der Behälter (12) mit einem Köder befüllt oder dieser daraus entfernt werden kann, und einer geschlossenen Stellung, in der ein Köder im Behälter (12) zurückgehalten wird, der Vorderabschnitt (14) mit einem schlagempfindlichen Auslösemechanismus (42) versehen ist, durch den das zweite Teil (20) aus seiner geschlossenen Stellung gelöst wird, damit es beim Auftreffen des Dispensers (10) auf der Wasseroberfläche, an der der Köder ausgebracht werden soll, seine geöffnete Stellung einnehmen kann, **dadurch gekennzeichnet, dass** der erste Teil (18) des Behälters (12) ein Hauptteil desselben ist und der zweite Teil (20) des Behälters (12) ein Deckel (20) desselben ist und dass der Winkel (α), durch den sich das Hauptteil (18) um eine imaginäre Mittelachse des Dispensers (10) erstreckt, wenigstens an vorderen Stellen entlang dieser Achse hinter dem Auslösemechanismus (42) mehr als 1,1π rad beträgt.

2. Fischköder-Dispenser (10) nach Anspruch 1, **dadurch gekennzeichnet, dass** sich der Winkel (α) an Stellen entlang der Achse am Hinterabschnitt (16) des Behälters (12) oder sich diesem annähernd auf im Wesentlichen π rad verringert.

3. Fischköder-Dispenser (10) nach Anspruch 1, **dadurch gekennzeichnet, dass** der Winkel (α) am Vorderende (14) des Behälters (12) mehr als 1,5π rad und am Hinterende (16) des Behälters (12) weniger als π rad beträgt.

4. Fischköder-Dispenser (10) nach Anspruch 3, **dadurch gekennzeichnet, dass** in rückwärtiger Richtung entlang der Achse der Dispensers (10) fortschreitend eine exponentielle Verringerung des Winkels (α) erfolgt.

5. Fischköder-Dispenser (10) nach einem der vorstehenden Ansprüche, **dadurch gekennzeichnet, dass** das Hauptteil (18) ein längliches Teil ist, das sich vom Vorderabschnitt (14) zum Hinterabschnitt (16) erstreckt.

6. Fischköder-Dispenser (10) nach einem der vorstehenden Ansprüche, **dadurch gekennzeichnet, dass** der Deckel (20) ein längliches Teil ist, das sich vom Vorderabschnitt (14) zum Hinterabschnitt (16) erstreckt.

7. Fischköder-Dispenser (10) nach einem der vorstehenden Ansprüche, **dadurch gekennzeichnet, dass** der Deckel (20) am Scharniergelenk (27) zur geöffneten Stellung hin federbelastet ist.

8. Fischköder-Dispenser (10) nach einem der vorstehenden Ansprüche, **dadurch gekennzeichnet, dass** der Auslösemechanismus (42) ein Druckstück (44) oder ein um eine Querachse drehbar gelagertes Element umfasst, das beim Auftreffen auf Wasser relativ zum Behälter (12) nach innen gepresst wird.

9. Fischköder-Dispenser (10) nach Anspruch 8, **dadurch gekennzeichnet, dass** das Druckstück (44) oder sonstige Element des Auslösemechanismus (42) federbelastet ist, so dass die Wirkung der Wasseroberfläche nach dem Auftreffen das Druckstück (44) oder sonstige Element gegen die Kraft der Feder (64) drängt.

10. Fischköder-Dispenser (10) nach einem der vorstehenden Ansprüche, **dadurch gekennzeichnet, dass** das hintere Ende (16) des Dispensers (10) mit Flossen (38) versehen ist.

11. Fischköder-Dispenser (10) nach einem der vorstehenden Ansprüche, **dadurch gekennzeichnet, dass** wenigstens ein Lufteinschluss (41) im Hinterende (16) vorgesehen ist.

12. Fischköder-Dispenser (10) nach einem der vorstehenden Ansprüche, **dadurch gekennzeichnet, dass** das Hinterende des Dispensers (10) mit Flossen (38) versehen ist, wobei das Scharniergelenk (27) vor den Flossen (38) angeordnet ist.

13. Fischköder-Dispenser (10) nach einem der vorstehenden Ansprüche, **dadurch gekennzeichnet, dass** sich eine Membran oder Wand (60) quer durch den Innenraum des Behälters (12) an dessen Vorderende (14) erstreckt, um den Auslösemechanismus (42) von dem Innenraum des Behälters (12), der den Köder aufnimmt, zu trennen.

## Revendications

1. Déchargeur d'amorce pour la pêche (10) comprenant un récipient creux profilé et allongé (12) qui a une partie avant (14), est globulaire à son extrémité avant et s'amenuise vers sa partie arrière (16), le récipient (12) ayant une première partie (18) et une seconde partie (20), les première et seconde parties (18 et 20) s'étendant toutes les deux de la partie avant (14) à la partie arrière (16) et ladite seconde partie (20) étant dotée d'une charnière (27) à son extrémité arrière, par laquelle elle est reliée de manière pivotante à ladite première partie (18) du récipient (12) de sorte à pouvoir pivoter entre une position ouverte dans laquelle le récipient (12) peut être rempli d'appât ou vidé et une position fermée dans laquelle l'appât est retenu dans le récipient (12), la partie avant (14) étant dotée d'un mécanisme de libération sensible aux chocs (42) par le biais duquel ladite seconde partie (20) est libérée de sa position fermée pour pouvoir adopter sa position ouverte lors du choc de l'émetteur (10) avec la surface de l'eau qui doit être appâtée, **caractérisé en ce que** ladite première partie (18) du récipient (12) est une partie principale de celui-ci et que ladite seconde partie (20) du récipient (12) est un couvercle (20) de celui-ci, et **en ce que** l'angle (α) dont ladite partie principale (18) s'étend autour d'un axe central imaginaire de l'émetteur (10), au moins dans des positions avant le long de cet axe à l'arrière du mécanisme de libération (42), excède 1,1 π radian.

2. Déchargeur d'amorce pour la pêche (10) selon la revendication 1, **caractérisé en ce que** ledit angle (α) diminue le long de l'axe ou à l'approche de la partie arrière (16) du récipient (12), pour atteindre sensiblement 1 π radian.

3. Déchargeur d'amorce pour la pêche (10) selon la revendication 1, **caractérisé en ce que** ledit angle (α) excède 1,5 π radian à l'extrémité de la partie avant (14) du récipient (12) et est inférieur à 1 π radian au niveau de la partie arrière (16) du récipient (12).

4. Déchargeur d'amorce pour la pêche (10) selon la revendication 3, **caractérisé en ce qu'**en direction de l'arrière le long de l'axe de l'émetteur (10), ledit angle (a) diminue de manière exponentielle.

5. Déchargeur d'amorce pour la pêche (10) selon l'une quelconque des revendications précédentes, **caractérisé en ce que** ladite partie principale (18) est une partie longitudinale qui s'étend de la partie avant (14) à la partie arrière (16).

6. Déchargeur d'amorce pour la pêche (10) selon l'une quelconque des revendications précédentes, **caractérisé en ce que** ledit couvercle (20) est une partie longitudinale qui s'étend de la partie avant (14) à la partie arrière (16).

7. Déchargeur d'amorce pour la pêche (10) selon l'une quelconque des revendications précédentes, **caractérisé en ce que** ledit couvercle (20) est muni d'un ressort de rappel au niveau de la charnière (27) vers sa position ouverte.

8. Déchargeur d'amorce pour la pêche (10) selon l'une quelconque des revendications précédentes, **caractérisé en ce que** le mécanisme de libération (42) comprend un piston (44) ou un élément pivotant autour d'un axe transversal, qui s'enfonce vers l'intérieur par rapport au récipient (12) lors du choc avec l'eau.

9. Déchargeur d'amorce pour la pêche (10) selon la revendication 8, **caractérisé en ce que** le piston (44) ou autre élément du mécanisme de libération (42) est muni d'un ressort de rappel de sorte que l'action de la surface de l'eau lors du choc presse le piston (44) ou autre élément contre la force du ressort (64).

10. Déchargeur d'amorce pour la pêche (10) selon l'une quelconque des revendications précédentes, **caractérisé en ce que** l'extrémité arrière (16) de l'émetteur (10) est dotée d'ailettes (38).

11. Déchargeur d'amorce pour la pêche (10) selon l'une quelconque des revendications précédentes, **caractérisé en ce qu'**au moins une chambre à air (41) est disposée dans ladite extrémité arrière (16).

12. Déchargeur d'amorce pour la pêche (10) selon l'une quelconque des revendications précédentes, **caractérisé en ce que** l'extrémité arrière de l'émetteur (10) est dotée d'ailettes (38), la charnière (27) étant située à l'avant des ailettes (38).

13. Déchargeur d'amorce pour la pêche (10) selon l'une quelconque des revendications précédentes, **caractérisé en ce qu'**une membrane ou une paroi (60) s'étend à travers l'intérieur du récipient (12), au niveau de son extrémité avant (14), pour isoler le mécanisme de libération (42) de l'intérieur du récipient (12) recevant l'appât.
